# EUROPEAN PATENT SPECIFICATION

(11) **EP 1 539 595 B1**
(45) Date of publication and mention of the grant of the patent: **26.09.2007**
(21) Application number: 02737182.2
(22) Date of filing: 05.06.2002
(51) Int. Cl.: B65D 5/70, B65D 5/74, B31B 1/90, B65B 61/18, B65D 5/06, B65D 5/40, B29C 65/08, B29C 65/02, B65D 17/50

(54) **CONTAINER PATCH AND METHOD OF FORMATION**
ABDECKSTREIFEN FÜR BEHÄLTER UND VERFAHREN ZUR HERSTELLUNG
PASTILLE DE CONTENANT ET PROCEDE DE FORMATION

(43) Date of publication of application: 15.06.2005
(73) Proprietor: Evergreen Packaging International B.V., 1043 EJ Amsterdam (NL)
(72) Inventor: TEDFORD, Jr., Richard, A., Loveland, OH 45140 (US)
(74) Representative: Schneider, Michael
(86) International application number: PCT/US2002/016566
(87) International publication number: WO 2003/104090

(56) References cited:
- US-A- 5 310 262
- US-A- 5 620 758
- PATENT ABSTRACTS OF JAPAN vol. 1995, no. 05, 30 June 1995 (1995-06-30) -& JP 07 040982 A (TOPPAN PRINTING CO LTD), 10 February 1995 (1995-02-10)
- PATENT ABSTRACTS OF JAPAN vol. 1999, no. 13, 30 November 1999 (1999-11-30) -& JP 11 235767 A (TOPPAN PRINTING CO LTD), 31 August 1999 (1999-08-31)
- PATENT ABSTRACTS OF JAPAN vol. 2000, no. 20, 10 July 2001 (2001-07-10) -& JP 2001 062943 A (TOPPAN PRINTING CO LTD), 13 March 2001 (2001-03-13)
- PATENT ABSTRACTS OF JAPAN vol. 018, no. 160 (M-1578), 17 March 1994 (1994-03-17) -& JP 05 330550 A (TOPPAN PRINTING CO LTD), 14 December 1993 (1993-12-14)

## Description

### BACKGROUND OF THE INVENTION

The invention relates to a gable-top or other beverage container with a post forming applied straw patch or cover. The patch or cover is a weldable, frangible barrier material for the gable straw opening. Also disclosed is an inventive process for producing the frangible material, as well as a unique application for applying the cover to the gable straw opening.

Previous methods for producing a straw opening have been based on applying webs or types of barrier material to webs of a package substrate. In limited cases where a local patch has been applied, the patch has been a two or more part system where removal of a top cover or other manipulation was required to expose and precondition the straw opening so that it could be pierced. A patch with the features defined in the preamble of present claim 1 is known from JP 07 040 982.

In addition, local patch applications in current practice require much higher penetration forces than extrusion over void manufacturing methods.

The gable-top strawhole has to be visible, provide an oxygen barrier, and be puncturable by a straw with comparable force to an aseptic juice package.

It is an objective of the present invention to provide a patch or cover for a strawhole opening in a gable-top container top that has a similar appearance to an opening in an aseptic container.

It is an objective of the present invention to provide a patch or cover for a strawhole opening in a gable-top container that provides an oxygen barrier and is puncturable by a straw with comparable force to an aseptic juice container.

### SUMMARY OF THE INVENTION

A patch or cover for a strawhole for a gable-top container, or the like, including a piece of frangible barrier film applied to a carton after bottom formation. The frangible film is welded on the inside of the carton, with the welding energy being applied from the outside (ultrasonic or induction) and travels through the paper laminate to produce a thermoplastic sea. The patch is applied by a small application component which holds the patch for welding and can be used for small cartons.
The subject-matter of the invention is defined by claim 1.
Further advantages are achieved by the embodiments indicated by the dependent claims.

### BRIEF DESCRIPTION OF THE DRAWINGS

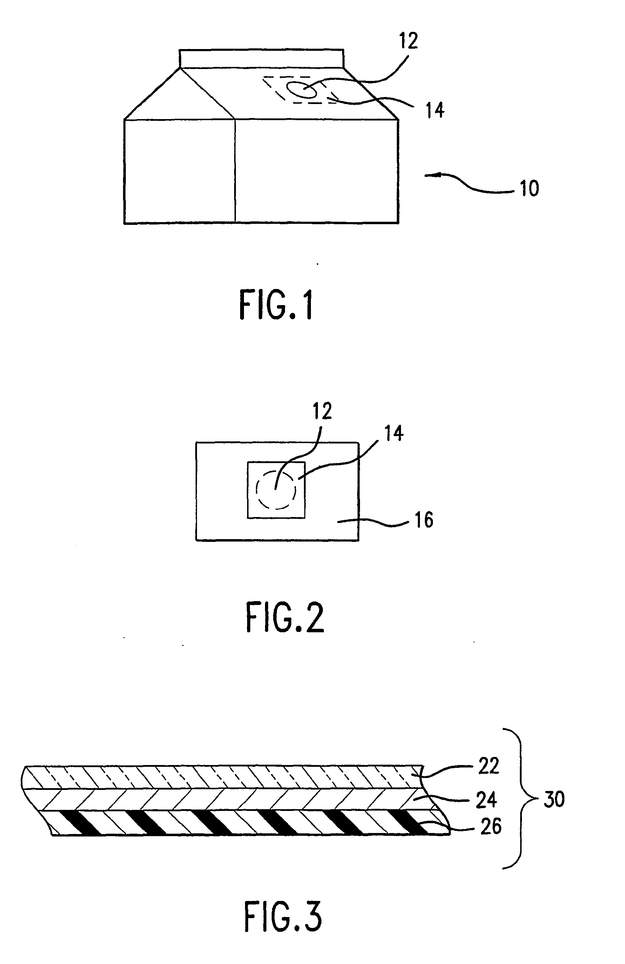

**Figure 1** is a perspective view of a gable-top container having a patch embodying the present invention;

**Figure 2** is a view of an inside of a top panel of a gable top carton having a patch welded thereon; and

**Figure 3** is a cross-section of the barrier laminate embodying the patch of the invention.

### DETAILED DESCRIPTION OF THE INVENTION

A finished package, such as a gable top container 10, is provided with a die cut strawhole 12 covered by an internal patch 14 circumadjacent to the strawhole on the product contact side 16 of the container 10.

The patch 14 is composed of a barrier film 26, an aluminum foil stiffener layer 24, and a thermoplastic seal layer 22 which is compatible with low density polyethylene seals. The layers 30 the patch material are extrusion laminated together to provide resistance to delamination when in contact with beverages. The patch material is puncturable with a 6 mm-2.54 cm diameter drinking straw made of 1 mil of polyolefin with a puncture force of less than 4 pounds.

The patch applicator means includes a tape metering device, a cut to length mechanism, a vacuum equipped mandrel for insertion of the patch into the carton, and a welding energy source located outside of the package. By applying the patch after the carton bottom is formed, the possibility of damage through contact with a filling machine is minimized.

The following is a representative barrier structure set forth in tabular form from inside (product contact) to seal layer 22.

| Layer | Material | Thickness |
|---|---|---|
| Barrier film | LDPE/EVOH/LDPE | .001 inches |
| Tie layer | Nucrel® | 4 lbs/3,000 sf |
| Foil layer | Aluminum Foil | - |
| Tie layer | Nucrel® | 4 lbs/3,000 sf |
| Sear layer | EVA | 4 lbs/3,000 sf |

| | | |
|---|---|---|
| LDPE = low density polyethylene EVOH = ethylene vinyl alcohol copolymer EVA = ethylene vinyl acetate | | |

The welded or sealed area or seal layer can cover the complete patch or only a thin perimeter of the patch material in contact with the inside layer of the carton.

Numerous patch material structures can be used including those which are pigmented in a variety of colors or metallic. The shape of the patch can vary and may include round, square, triangular, and the like as desired. Likewise, the shape of the opening in the gable top can vary.

A "twist-cap" can be applied over the patch to allow for opening and pouring of the beverage instead of a straw.

The patch can be applied while the carton is in the web or blank form.

The patch and/or the carton wall can have different barrier properties. (The carton wall need not have an aluminum foil barrier, but the externally visible patch can.)

Through use of an ultrasonic filament welder, it is possible to apply small patches of thin material to the area of interest. These patches are comparable to aseptic brick openings in appearance and function. However, no additional components need to be applied to the patch area to allow functioning of a straw. Because the welding energy is transmitted through the carton instead of through the patch, it is possible to use more dedicated membranes for the patch than in a typical two piece application which applies heat through the patch.

The embodiments described above are exemplary of the subject matter of the invention. The invention can be interpreted by a reasonable person skilled in the art to include modifications or changes and the invention is only limited by the scope of the appended claims.

## Claims

1. A patch for a gable-top carton opening comprising:
a laminate frangible material layer welded to an underside of a gable-top carton panel; the laminate frangible material layer comprising a barrier layer, a foil layer and a thermoplastic seal layer, **characterized in that** said laminate frangible material layer is puncturable with a 6 mm-2.54 cm diameter drinking straw made of 0.0254 mm (1mil) of polyolefin with a puncture force of less than 1.81 kg (4 pounds)

2. The patch for a gable-top carton opening as claimed in claim 1, wherein the patch is welded by ultrasonic or induction welding from an exterior of the carton panel to produce a seal between the underside of the carton panel and the thermoplastic seal layer of the laminate frangible material layer.

3. The patch for a gable-top carton opening as claimed in claim 1, wherein the thermoplastic seal layer is present on a perimeter of the patch in contact with the underside of the carton panel.

4. The patch for a gable-top carton opening as claimed in claim 1, wherein the laminate frangible material layer is circumadjacent to the opening.

5. The patch for a gable-top carton opening as claimed in claim 1, wherein the laminate frangible layer material is extrusion laminated together.

6. The patch for a gable-top carton opening as claimed in claim 1, wherein the barrier layer is a three layer laminate of low density polyethylene, ethylene vinyl alcohol copolymer, and low density polyethylene.

7. The patch for a gable-top carton opening as claimed in claim 1, wherein the foil layer is a layer of aluminum foil.

8. The patch for a gable-top carton opening as claimed in claim 1, wherein the thermoplastic seal layer is a layer of ethylene vinyl acetate.

9. The patch for a gable-top carton opening as claimed in claim 1, wherein the laminate frangible material layer further comprises an adhesive tie layers between the foil layer and the barrier layer, and the foil layer and the thermoplastic seal layer.

10. A method of applying a patch to an opening of a gable-top carton panel comprising the steps of:
welding a patch comprising a laminate frangible material layer comprising a barrier layer, a foil layer and a thermoplastic seal layer to the underside of the gable-top carton panel by welding with a device contained on an outside of the carton, **characterized in that** said laminate frangible material layer is puncturable with a 6 mm-2.54 cm diameter drinking straw made of 0.0254 mm (1mil) of polyolefin with a puncture force of less than 1.81 kg (4 pounds).

11. The method of applying a patch to an opening of a gable-top carton panel as claimed in claim 10, wherein the patch is welded to the underside of the gable top carton panel after a carton bottom has been formed.

12. An application means for placing a patch over an opening of a gable-top carton wherein said patch comprises a laminate frangible material layer welded to an underside of the gable-top carton panel, the laminated frangible material layer comprising a barrier layer, a foil layer and a thermoplastic seal layer, said means comprising:
i) a tape metering device to produce a desire amount of patch;
ii) a cut to length mechanism for cutting the patch into a desired shape;
iii) a vacuum equipped mandrel for insertion of the patch into the opening in the carton; and
iv) a welding energy source located outside of the carton, **characterized in that** said laminate frangible material layer is puncturable with a 6 mm-2.54 cm diameter drinking straw made of 0.0254 mm (1mil) of polyolefin with a puncture force of less than 1.81 kg (4 pounds)

13. The application means for placing a patch over an opening in a gable-top carton as claimed in claim 12, wherein the welding energy source is an ultrasonic source or an induction source.

## Patentansprüche

1. Abdeckstreifen für eine Giebelspitzenkarton-Öffnung, umfassend
eine zerbrechliche Laminatmaterialschicht, geschweißt auf eine Unterseite einer Giebelspitzenkarton-Platte, wobei die zerbrechliche Laminatmaterialschicht umfasst eine Barrierenschicht, eine Folienschicht und
eine thermoplastische. Siegelschicht, **dadurch gekennzeichnet, dass** die zerbrechliche Laminatmaterialschicht durchstechbar ist mit einem Trinkstrohhalm eines 6 mm - 2,54 cm Durchmessers, erzeugt aus 0,0254 mm (1 mil) Polyolefin mit einer Durchstechkraft von weniger als 1,81 kg (4 Pfund).

2. Abdeckstreifen für eine Giebelspitzenkarton-Öffnung nach Anspruch 1, bei der der Abdeckstreifen geschweißt ist durch Ultraschall- oder Induktionsschweißen von einer Außenseite der Kartonplatte, um ein Siegel zwischen Unterseite der Kartonplatte und der thermoplastischen Siegelschicht der zerbrechlichen Laminatmaterialschicht zu erzeugen.

3. Abdeckstreifen für eine Giebelspitzenkarton-Öffnung nach Anspruch 1, bei der die thermoplastische Siegelschicht vorhanden ist auf einer Eingrenzung des Abdeckstreifens in Kontakt mit der Unterseite der Kartonplatte.

4. Abdeckstreifen für eine Giebelspitzenkarton-Öffnung nach Anspruch 1, bei der sich die zerbrechliche Laminatmaterialschicht benachbart zum Umfang der Öffnung befindet.

5. Abdeckstreifen für eine Giebelspitzenkarton-Öffnung nach Anspruch 1, bei der das zerbrechliche Laminatschichtmaterial durch Extrusion zusammenlaminiert ist.

6. Abdeckstreifen für eine Giebelspitzenkarton-Öffnung nach Anspruch 1, bei der die Barrierenschicht ein Drei-Schicht-Laminat aus Polyethylen niedriger Dichte, Ethylen Vinylalkohol-Copolymer und Polyethylen niedriger Dichte ist.

7. Abdeckstreifen für eine Giebelspitzenkarton-Öffnung nach Anspruch 1, bei der die Folienschicht eine Schicht aus Aluminiumfolie ist.

8. Abdeckstreifen für eine Giebelspitzenkarton-Öffnung nach Anspruch 1, bei der die thermoplastische Siegelschicht eine Schicht aus Ethylenvinylacetat ist.

9. Abdeckstreifen für eine Giebelspitzenkarton-Öffnung nach Anspruch 1, bei der die zerbrechliche Laminatmaterialschicht weiter umfasst Klebstoffbindeschichten zwischen der Folienschicht und der Barrierenschicht, und der Folienschicht und der thermoplastischen Siegelschicht.

10. Verfahren zum Aufbringen eines Abdeckstreifens auf eine Öffnung einer Giebelspitzenkarton-Platte, umfassend die Schritte:
Schweißen eines Abdeckstreifens, umfassend eine zerbrechliche
Laminatmaterialschicht, umfassend eine Barrierenschicht, eine Folienschicht und eine thermoplastische Siegelschicht, auf die Unterseite der Giebelspitzenkarton-Platte durch Schweißen mit einer auf einer Außenseite des Kartons enthaltenen Vorrichtung, **dadurch gekennzeichnet, dass** die zerbrechliche Laminatmaterialschicht durchstechbar ist mit einem Trinkstrohhalm eines 6 mm - 2,54 cm Durchmessers, erzeugt aus 0,0254 mm (1 mil) Polyolefin mit einer Durchstechkraft von weniger als 1,81 kg (4 Pfund).

11. Verfahren zum Aufbringen eines Abdeckstreifens auf eine Öffnung einer Giebelspitzenkarton-Platte nach Anspruch 10, wobei der Abdeckstreifen geschweißt wird auf die Unterseite der Giebelspitzenkarton-Platte, nachdem der Kartonboden geformt worden ist.

12. Aufbringungsmittel zum Anordnen eines Abdeckstreifens über einer Öffnung eines Giebelspitzenkartons, wobei der Abdeckstreifen umfasst eine zerbrechliche Laminatmaterialschicht, die auf eine Unterseite der Giebelspitzenkarton-Platte geschweißt ist, wobei die zerbrechliche Laminatmaterialschicht umfasst eine Barrierenschicht, eine Folienschicht und eine thermoplastische Siegelschicht, wobei das Mittel umfasst:
i) eine Bandbemessungsvorrichtung, um eine erwünschte Menge des Abdeckstreifens zu erzeugen;
ii) einen In-Länge-Schneidemechanismus zum Schneiden des Abdeckstreifens in eine erwünschte Form;
iii) einen mit Vakuum ausgerüsteten Dorn zum Einsetzen des Abdeckstreifens in die Öffnung in den Karton; und
iv) eine Schweißenergiequelle, angeordnet außerhalb des Kartons, **dadurch gekennzeichnet, dass** die zerbrechliche Laminatmaterialschicht durchstechbar ist mit einem Trinkstrohhalm eines 6 mm - 2,54 cm Durchmessers, erzeugt aus 0,0254 mm (1 mil) Polyolefin mit einer Durchstechkraft von weniger als 1,81 kg (4 Pfund).

13. Aufbringungsmittel zum Anordnen eines Abdeckstreifens über einer Öffnung in einem Giebelspitzenkarton nach Anspruch 12, bei dem die Schweißenergiequelle eine Ultraschall- oder eine Induktionsquelle ist.

## Revendications

1. Pastille pour ouverture pratiquée dans un contenant en carton à pignon comprenant :
une couche de matériau stratifié frangible soudée à une face inférieure d'un panneau de contenant en carton à pignon, la couche de matériau stratifié frangible comprenant une couche barrière, une couche de feuille et une couche d'hermétisation thermoplastique, **caractérisée en ce que** ladite couche de matériau stratifié frangible peut être percée par une paille d'un diamètre de 6 mm à 2,54 cm réalisée dans 0,0254 mm (1 mil) de polyoléfine avec une force de perforation inférieure à 1,81 kg (4 livres).

2. Pastille pour ouverture pratiquée dans un contenant en carton à pignon selon la revendication 1, dans laquelle la pastille est soudée par soudage par ultrasons ou par induction depuis l'extérieur du panneau du carton pour produire une soudure entre la face inférieure du panneau du carton et la couche d'hermétisation thermoplastique de la couche de matériau stratifié frangible.

3. Pastille pour ouverture pratiquée dans un contenant en carton à pignon selon la revendication 1, dans laquelle la couche d'hermétisation thermoplastique est présente sur le périmètre de la pastille en contact avec la face inférieure du panneau du carton.

4. Pastille pour ouverture pratiquée dans un contenant en carton à pignon selon la revendication 1, dans laquelle la couche de matériau stratifié frangible est adjacente au pourtour de l'ouverture.

5. Pastille pour ouverture pratiquée dans un contenant en carton à pignon selon la revendication 1, dans laquelle le matériau en couche stratifié frangible est associé par stratification par extrusion.

6. Pastille pour ouverture pratiquée dans un contenant en carton à pignon selon la revendication 1, dans laquelle la couche barrière est un stratifié tri-couche de polyéthylène basse densité, copolymère d'éthylène et d'alcool vinylique, et polyéthylène basse densité.

7. Pastille pour ouverture pratiquée dans un contenant en carton à pignon selon la revendication 1, dans laquelle la couche de feuille est une couche de feuille d'aluminium.

8. Pastille pour ouverture pratiquée dans un contenant en carton à pignon selon la revendication 1, dans laquelle la couche d'hermétisation thermoplastique est une couche d'acétate de vinyle éthylène.

9. Pastille pour ouverture pratiquée dans un contenant en carton à pignon selon la revendication 1, dans laquelle la couche de matériau stratifié frangible comprend en outre des couches de liaison adhésives entre la couche de feuille et la couche barrière, et la couche de feuille et la couche d'hermétisation thermoplastique.

10. Procédé d'application d'une pastille sur l'ouverture d'un panneau de contenant en carton à pignon comprenant les étapes consistant à :
souder une pastille comprenant une couche de matériau stratifié frangible comprenant une couche barrière, une couche de feuille et une couche d'hermétisation thermoplastique sur la face inférieure du panneau de contenant en carton à pignon en effectuant une soudure au moyen d'un dispositif situé à l'extérieur du contenant en carton, **caractérisé en ce que** ladite couche de matériau stratifié frangible peut être percée par une paille d'un diamètre de 6 mm à 2,54 cm réalisée dans 0,0254 mm (1 mil) de polyoléfine avec une force de perforation inférieure à 1,81 kg (4 livres).

11. Procédé d'application d'une pastille sur l'ouverture d'un panneau de contenant en carton à pignon selon la revendication 10, dans lequel la pastille est soudée à la face inférieure du panneau de contenant en carton à pignon après la formation du fond du carton.

12. Moyen d'application permettant de placer une pastille sur l'ouverture d'un contenant en carton à pignon, dans lequel ladite pastille comprend une couche de matériau stratifié frangible soudée à la face inférieure du panneau de contenant en carton à pignon, la couche de matériau stratifié frangible comprenant une couche barrière, une couche de feuille et une couche d'hermétisation thermoplastique, ledit moyen comprenant :
i) un dispositif mesureur de ruban permettant de produire une quantité souhaitée de pastille ;
ii) un mécanisme de coupe à longueur permettant de découper la pastille en une forme souhaitée ;
iii) un mandrin équipé d'une source de vide permettant d'insérer la pastille dans l'ouverture du contenant en carton ; et
iv) une source d'énergie de soudure située à l'extérieur du contenant en carton, **caractérisé en ce que** ladite couche de matériau stratifié frangible peut être percée par une paille d'un diamètre de 6 mm à 2,54 cm réalisée dans 0,0254 mm (1 mil) de polyoléfine avec une force de perforation inférieure à 1,81 kg (4 livres).

13. Moyen d'application permettant de placer une pastille sur l'ouverture d'un contenant en carton à pignon selon la revendication 12, dans lequel la source d'énergie de soudure est une source à ultrasons ou à induction.
